# EUROPÄISCHE PATENTANMELDUNG

(11) **EP 1 930 834 A1**
(43) Veröffentlichungstag der Anmeldung: **11.06.2008**
(21) Anmeldenummer: 06025080.0
(22) Anmeldetag: 05.12.2006
(51) Int. Cl.: G06F 21/02

(54) **Kryptographisch gesichertes Prozessorsystem**

(71) Anmelder: Siemens Schweiz AG, 8047 Zürich (CH)
(72) Erfinder: Roland, Andreas, 8057 Zürich (CH); Jörg, Thomas, 8049 Zürich (CH)
(74) Vertreter: Kley, Hansjörg

(57) **Zusammenfassung**

In Prozessorsystemen müssen oft verschlüsselte Daten, z.B. ein Lizenz-File, in jedem Betriebszustand sicher abgelegt sein und dürfen nicht durch Debugging oder temporär über Schnittstellen oder temporär während einer Programmierung unverschlüsselt zugänglich werden. Dazu wird ein Prozessorsystem (10) vorgeschlagen, das als FPGA (10) ausgeführt ist. Bei jeder Programmierung des FPGA (10) ist zwischen jedem Memory-Controller (11) oder zwischen jeder Schnittstelle (17) und dem Bussystem (18) ein Verschlüsselungsmodul (12; 12.1) eingefügt, um die im Prozessorsystem (10) befindlichen Daten kryptographisch zu sichern. Nach erfolgter Generierung können weitere Schlüssel, z.B. für eine PKI-Infrastruktur rein intern erzeugt werden.

## Beschreibung

Die vorliegende Erfindung betrifft ein kryptographisch gesichertes Prozessorsystem gemäss dem Oberbegriff des Patentanspruches 1.

Im folgenden wird anstelle einer deutschen Nichtfachsprache teilweise eine englischsprachige Fach-Nomenklatur benutzt, wie z.B.

| | |
|---|---|
| ROM | Festwertspeicher; |
| «Cache» | Zwischenspeicher, Pufferspeicher für direkten Zugriff vom Prozessor her; |
| TPM | Trusted platform module, spezifiziert durch www.trustedcomputinggroup.org ; |
| File | Datei, usw. |

Durch die Verwendung solcher Fachbegriffe und geläufiger Akronyme lassen sich Unklarheiten vermeiden. Eine Liste der verwendeten Akronyme, Abkürzungen und Begriffe am Schluss dieses Dokumentes bildet einen integralen Bestandteil dieser Schrift.

Eine Berechtigung an der Nutzung eines Anwendungsprogrammes ist meist in Form einer verschlüsselten Datei gespeichert. Diese Datei wird oft Lizenz-File genannt. Dazu ist es erforderlich, dass diese verschlüsselten Dateien auch in einem externen Speicher stets verschlüsselt sein müssen.

In US 2004/0123120 A1 [1] ist ein «Cryptography accelerator input interface data handling» offenbart, das für den Einbau in ein Prozessorsystem mit einem PCI-Bus vorgesehen ist. Hier ist offensichtlich, dass vom Bus aus ein Zugriff auf schützenswerte Daten möglich ist. Die Schrift US 2004/0123120 A1 [1] ist insoweit bemerkenswert, als verschiedene Technologien zur Realisierung des «Cryptography accelerator input interface data handling» vorgeschlagen werden, so auch als ASIC, FPGA oder als PLD.

Der nach dem Stand der Technik bekannte Schutz basiert auf einer Verschlüsselung der statischen Daten und einer Entschlüsselung vor der Verwendung der schützenswerten Daten ggf unter Zuhilfenahme eines TPM's. Zur Laufzeit sind die schützenswerten Daten jedoch nicht mehr verschlüsselt, sondern höchstens durch einen «Security by Obscurity» - Ansatz verschleiert. «Security by Obscurity», in deutsch «Sicherheit durch Verschleierung» bedeutet, dass Sicherheit durch das Geheimhalten von umgesetzten Sicherheitsmechanismen erreicht werden soll. Beim vorgenannten Ansatz ist ein JTAG Port des Prozessors nach wie vor frei zugänglich und mit Hilfe eines Debuggers ist es somit möglich, die Daten nach der Entschlüsselung abzugreifen oder diese Daten können an einem externen Speicher abgegriffen werden, falls kein JTAG-Port zur Verfügung stehen sollte. Im allgemeinen wird von der JTAG-Schnittstelle oder dem JTAG-Port gesprochen. Die JTAG-Schnittstelle besteht dabei aus den fünf Steuerleitungen:
- Test Data Input (TDI);
- Test Data Output (TDO);
- Test ClocK (TCK);
- Test Mode Select Input (TMS);
- Test ReSeT (TRST).

Wird auf die vorgenannte JTAG-Schnittstelle verzichtet, ist in aller Regel eine äquivalente Schnittstelle erforderlich, um ein Prozessorsystem zu testen (Debugging). Dieser Schwachpunkt einer Intrusion ist ohne geeignete Massnahmen stets vorhanden.

Der vorliegenden Erfindung liegt nun ausgehend vom vorgenannten Stand der Technik die Aufgabe zugrunde, ein Prozessorsystem anzugeben, bei dem verschlüsselte Daten, z.B. ein Lizenz-File, in jedem Betriebszustand sicher abgelegt sind und nicht durch Debugging oder temporär über Schnittstellen oder temporär während eine Konfigurierung unverschlüsselt zugänglich sind oder zugänglich werden.

Diese Aufgabe wird für ein Prozessorsystem der eingangs genannten Art durch die im Patentanspruch 1 angegebenen Merkmale gelöst.

Durch die im Patentanspruch 1 angegebene erfindungsgemässe Lösung ist ein Prozessorsystem geschaffen, das bereits bei der Generierung vollständig kryptogafisch gesichert ist, so dass bei der Inbetriebnahme keine Intrusion mehr möglich ist und später im Betrieb durch die Verschlüsselung via die Memory-Controller ebenfalls eine Intrusion verhindert wird.

Die Methode zur Datenverschlüsselung «on the fly» in den den Memory-Controllern vorgeschalteten Verschlüssungsmodulen gemäss einer bevorzugten Ausführungsform der vorliegenden Erfindung genügt den kryptografischen Anforderungen und ist schnell und effizient zu berechnen, damit die Latenzzeit nicht wesentlich erhöht wird.

Eine weitere vorteilhafte Weiterbildung besteht darin, dass unmittelbar nach der Programmierung des FPGA und vor der Inbetriebnahme ein Anwendungsmodul zu einer Schnittstelle geladen wird, dass die Verbindung zu einem externen Rechner über das Protokoll sichert, z.B. mit Secure Socket Layer SSL.

Vorteilhafte Ausgestaltungen der Erfindung sind in weiteren Ansprüchen angegeben.

Ein Ausführungsbeispiel der Erfindung wird nachfolgend anhand der Zeichnung näher erläutert. Dabei zeigen:

| | |
|---|---|
| Figur 1 | Prozessorplattform während dem Ladevorgang bzw. während der Generierung; |
| Figur 2 | Gesicherte Prozessorplattform im Betrieb. |

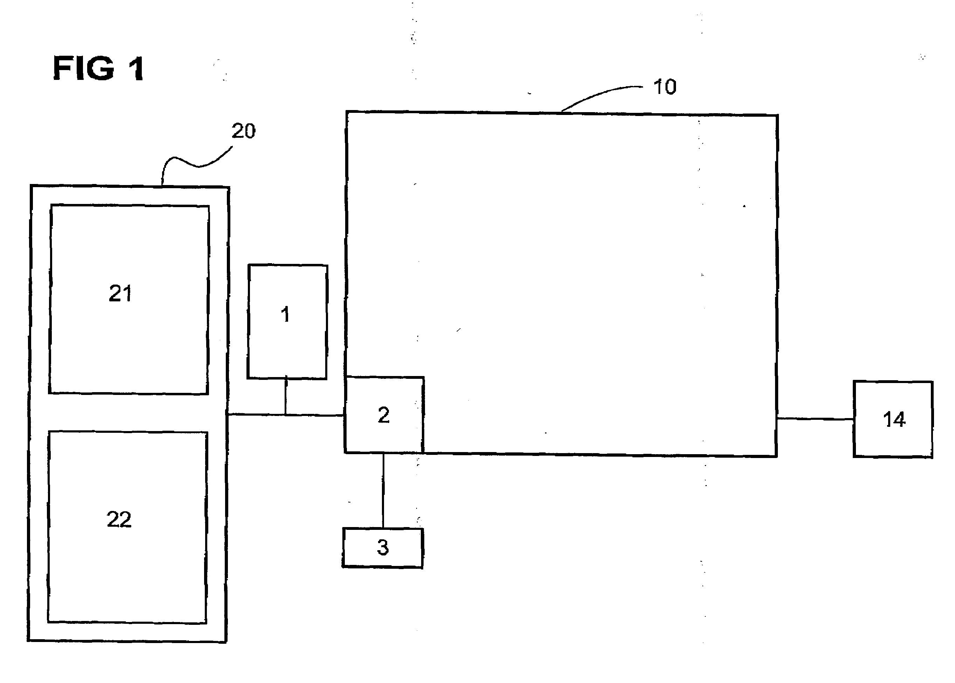

Die Struktur einer gesicherten Prozessorplattform 10 gemäss einer bevorzugten Ausführungsform der vorliegenden Erfindung ist den Figuren 1 bis 2 zu entnehmen. Basis ist ein reprogrammierbares FPGA bzw. ein FPGA, das auf SRAM-Technologie beruht und bei jedem Start konfiguriert/programmiert werden muss. Ein FPGA (Field Programmable Gate Array) ist ein frei programmierbarer Logikschaltkreis. Mit ihm können digitale Schaltungen beliebiger Funktionalität realisiert werden, die man sonst aus einzelnen ICs mit festgelegten Funktionen aufbauen müsste.

Als Grundvoraussetzung muss das FPGA verschlüsselte Bitstreams unterstützen und muss ein Auslesen des Bitstreams sperren können. Der dazu benötigte Schlüssel wird bei der Produktion in das FPGA geladen und ist anschliessend nicht wieder auslesbar. Damit dieser Schlüssel im FPGA gespeichert bleibt, ist in der Regel eine externe Stützbatterie 3 notwendig. Der verschlüsselte Bitstream 22 wird ebenfalls bei der Produktion in den Flash-Speicher 20 geladen. Zusätzlich wird ein Public/Private-Schlüsselpaar intern generiert. Dazu wird von aussen über eine gesicherte Verbindung eine zufällige Sequenz zugeführt. Diese gleiche zufällige Sequenz kann auch zur Generierung eines Seedwertes S für den PRS-Generator verwendet werden, weitere Angaben dazu siehe unten.

Die obengenannten Schritte dienen der Vorbereitung des Systems.

Der Schritt der FPGA-Programmierung wird beim Geräte-Anlauf ausgeführt und ist der Figur 1 zu entnehmen. In einem externen Flash-Speicher 20 sind gespeichert:
i) das verschlüsselte FPGA-Image 22 - auch Bitstream genannt - ;
ii) eine verschlüsselte Applikation 21, die sowohl Programme als auch Daten umfasst, z.B. auch ein Software-Modul 12.1 für eine Sicherung des Datentransfers nach aussen über ein Protokoll, z.B. SSL.
iii) Während der Produktion generierte Schlüssel und Startwerte für den PRS-Generator.

Mit einem als CPLD ausgeführten Hilfsbaustein 1 wird der Bitstream 22 in das FPGA 10 geladen. Die Programmierschnittstelle 2 entschlüsselt dabei die empfangenen Daten. Der am FPGA angeschlossene externe RAM-Speicher 14 hat in diesem Zustand noch keine Funktion. Die FPGA-Programmierung ist dabei so vorzunehmen, dass keine Debug-Schnittstellen entstehen, weil diese Schnittstellen als Master des Bussystems 18 freien Zugriff auf die unverschlüsselten Transfers auf dem Bussystems 18 haben.

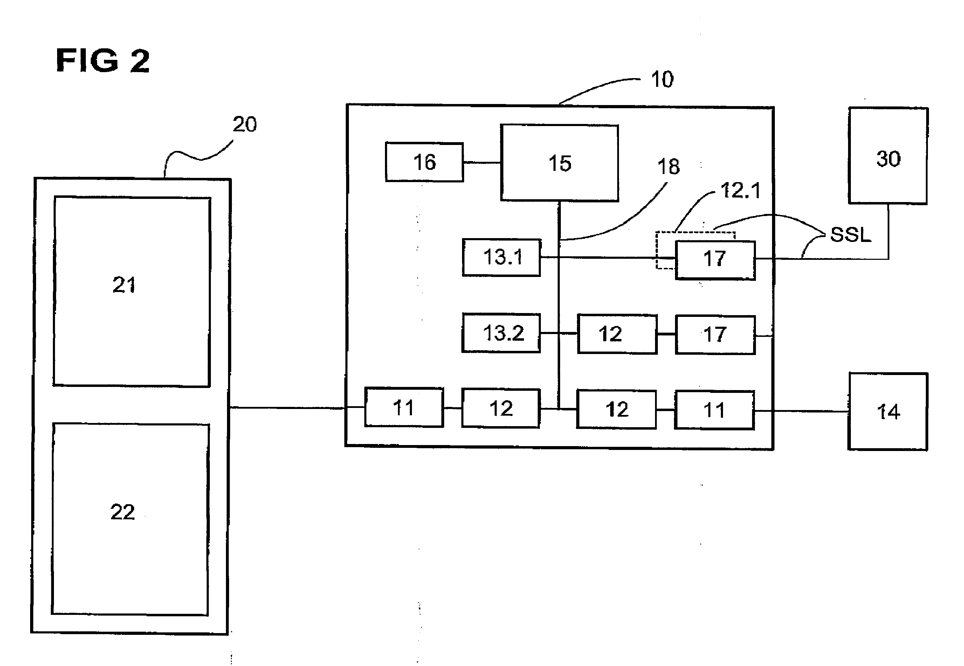

Nach dem Ladevorgang ist das CPLD nicht mehr an der Funktionalität der Schaltung beteiligt. Durch das Laden des Bitstreams erfolgt die Programmierung des FPGA 10 zu einem Prozessorsystem 10 mit den in Figur 2 dargestellten Komponenten. Dieses Prozessorsystem weist auf:
- Prozessor 15 mit Cache 16;
- Festwertspeicher 13.2;
- Schreib-Lesespeicher 13.1 von sehr beschränkter Kapazität; deshalb ist meistens ein externer RAM-Speicher 14 erforderlich;
- über ein Verschlüsselungsmodul 12 angeschlossene Memory-Controller 11;
- über ein Verschlüsselungsmodul 12 angeschlossene Schnittstelle 17 für den Anschluss eines externen Gerätes, z.B. ein Personalcomputer.

Im Festwertspeicher 13-2 befindet sich ein sogenannter Boot-Loader, welcher zum Starten der eigentlichen Applikation des Prozessors dient. Im Weiteren befindet sich darin auch mindestens ein Schlüssel, welcher zur Verschlüsselung der im Folgenden selbst generierten Schlüssel verwendet wird. Weitere benötigte Schlüssel und Zertifikate können ebenfalls schon im FPGA-Bitstream enthalten sein.

Mit diesen Voraussetzungen ist das Prozessorsystem in der Lage eigene Schlüssel und Schlüsselpaare zu generieren, wovon nur noch die öffentlichen Schlüssel das Prozessorsystem verlassen.

Ein allfällig vorhandenes JTAG-Port (oder ein äquivalentes Port) des Prozessors 15 ist dabei absichtlich nicht mit dem JTAG-Port des Bausteins 10 (=FPGA) verbunden. Damit kann ein externes Debugging und somit eine Intrusion verhindert werden. Des weiteren ist die Auslesemöglichkeit des sogenannten FPGA-Images durch die aktivierte Bitstream-Verschlüsselung deaktiviert.

Eine mögliche Implementation der «on the fly» Verschlüsselung für Daten auf dem Speicherbus beinhaltet:
Ein internes Block-RAM, welches in einem gebäuchlichen FPGA 2 kByte gross ist, wird beim Gerätehochlauf initialisiert mit einer Sequenz aus einem Pseudo-Random-Sequence Generator, im folgenden PRS-Generator genannt mit genügend grosser Ordnung. Dieser PRS-Generator seinerseits wird initialisiert nach folgender Methode:
   Im kryptografisch gesicherten Datenbereich des Flash-Speichers 20 oder in einem anderen permanenten Speicher, ist ein Seed-Wert 'S' abgelegt; anstelle von Seed-Wert ist auch von Startwert für einen Zufallsgenerator die Rede. Dieser Wert initialisiert den PRS-Generator......Das Block-RAM im Prozessorsystem 20 hat die gleiche Breite wie die zu verschlüsselnden Daten.

Die ersten n Werte (1 bis n) des PRS-Generators füllen das Block-RAM und bilden somit einen Teil T1(i) des Schlüssels für die Datenverschlüsselung. Die zwei nächsten Werte (n+1), (n+2) des PRS-Generators werden verwendet um den zweiten und dritten Teil T2 und T3 des Schlüssels zu bilden. Im Folgenden generiert der PRS-Generator einen neuen Seed-Wert 'S', welcher den bisherigen ersetzen kann. Nicht veränderliche SeedWerte 'S' können sich im Festwertspeicher 13.2 befinden, veränderliche Seedwerte werden im Flash-Speicher 20 abgelegt. Zu beachten ist: Im Flash-Speicher 20 ist der Seed-Wert S kryptografisch gesichert abgelegt und ist somit gegen Auslesen und Manipulation geschützt.

Bei genügend Resourcen im Prozessorsystem 20 können die vier Komponenten T1, T2, T3 und 'S' auch in unabhängigen PRS-Generatoren erzeugt werden. Der erste Seed-Wert 'S' wird nach der gleichen Methode generiert wie die selbstgenerierten Schlüssel.

Mit der vorstehend beschriebenen Methode werden die Daten wie folgt verschlüsselt:
Der Adressbus teilt sich auf in A1 der Breite a1 und A2 der Breite a2, wobei a1 der Adressbreite des Block-RAM entspricht und a1+a2 die prozessorspezifische Adressbreite ist. Von T2 werden nur al Bits benötigt zur Verknüpfung mit A1. T1(i) und T3 haben die gleiche Busbreite wie D-PLAIN und D-CRYPT. D-CRYPT = D-PLAIN xor T1(A1 xor T2) xor T3.
Mit T2 wird somit der Bezug zwischen A-PLAIN (welche auch extern sichtbar ist) und der Position der verwendeten PRS-Sequenz aufgehoben. Mit T3 wird ebenso der Bezug zwischen D-Crypt und T1 aufgehoben. Somit wird es verunmöglicht auch bei vermuteten Werten von D-PLAIN (z.B. Header eines Files) den Schlüssel zu berechnen.

### Liste der verwendeten Bezugszeichen Akronyme

- 1: CPLD
- 2: Schlüssel, key
- 3: Batterie
- 10: FPGA basierte Prozessorplattform; verschlüsseltes FPGA
- 11: Memory Controller
- 12: On the Fly encryption; Verschlüsselung
- 12.1: Anwendungssoftware, Software-Modul zur Sicherung des Datentransfers und Verhinderung der Intrusion über ein Protokoll
- 13.1: RAM; Scheib-/Lesespeicher
- 13.2: ROM; Festwertspeicher
- 14: Externer RAM-Speicher
- 15: Prozessor
- 16: Cache
- 17: Schnittstelle, Interface
- 18: FPGA-internes Bussystem
- 20: Flash-Speicher
- 21: Speicherbereich für verschlüsselte Speicherung von Software und Daten
- 22: Speicherbereich für verschlüsselte Speicherung des FPGA-Image, auch Bitstream genannt
- 30: Externer Rechner, externes Gerät
- S: Startwert, Seedwert

### Liste der verwendeten Akronyme

- ASIC: Application Specific Integrated Circuit
- CPLD: Complex Programmable Logic Device
- FPGA: Field Programmable Gate Array
- JTAG: Joint Test Action Group, nach IEEE 1149.1; beinhaltet ein Verfahren zum Debugging von Hardware
- PCI: Peripheral Component Interconnect, auch PCI-Bus genannt
- PKI: Public Key Infrastructure
- PLD: Programmable Logic Device
- PSR: Pseudo-Random-Sequence
- SSL: Secure Sockets Layer
- TPM: Trusted Platform Module

### Literaturliste

[1] US 2004/0123120 A1
   Cryptography accelerator input interface data handling Buer et al.
   Assignee: Broadcom Corporation, Irvine, CA Offenlegungsdatum 24. Juni 2004

## Patentansprüche

1. Prozessorsystem (10) mit kryptographisch zu sichernden Daten, das über ein Bussystem (18) miteinander verbunden enthält:
- einen Prozessor (15);
- einen Festwertspeicher (13.2) und einen Schreib-Lesespeicher (13.1) und
- mindestens einen Memory-Controller (11) für den Anschluss von externen Speichern (14, 20);
**dadurch gekennzeichnet**e dass
das Prozessorsystem (10) als «Field Programmable Gate Array» (10) - im folgenden FPGA genannt - ausgeführt ist und dass bei jeder Programmierung des FPGA (10) zwischen jedem Memory-Controller (11) oder zwischen jeder Schnittstelle (17) und dem Bussystem (18) ein Verschlüsselungsmodul (12) eingefügt wird, um die im Prozessorsystem (10) befindlichen Daten kryptographisch zu sichern.

2. Prozessorsystem (10) nach Anspruch 1,
**dadurch gekennzeichnet, dass**
nach der Programmierung des FPGA ein als Software-Modul ausgeführtes Verschlüsselungsmodul (12.1) zwischen einer Schnittstelle (17) und dem Bussystem (18) eingefügt ist und die Daten über ein Protokoll (SSL) gesichert sind.

3. Prozessorsystem (10) nach Anspruch 1 oder 2,
**dadurch gekennzeichnet, dass**
für das Verschlüsselungsmodul (12) die Schlüssel intern im Prozessorsystem (10) generiert werden.

4. Prozessorsystem (10) nach einem der Ansprüche 1 bis 3,
**dadurch gekennzeichnet, dass**
für eine erste Schlüsselgenerierung eine zufällige Sequenz von aussen über eine Schnittstelle (17) dem Prozessorsystem (10) zugeführt wird.

5. Prozessorsystem (10) nach einem der Ansprüche 1 bis 4,
**dadurch gekennzeichnet, dass**
das Verschlüsselungsmodul (12) nach einem Public/Private-Key-Verfahren arbeitet.

## Geänderte Patentansprüche

### Geänderte Patentansprüche gemäss Regel 137(2) EPÜ.

**1.** Prozessorsystem (10) mit einem kryptographisch gesicherten «Field Programmable Gate Array»-Image (22) und einer kryptographisch gesicherten Applikation (21); wobei das Prozessorsystem (10) über ein Bussystem (18) miteinander verbunden enthält;
- einen Prozessor (15);
- einen Festwertspeicher (13.2) und einen Schreib-/Lesespeicher (13.1) und
- mindestens einen Memory-Controller (11) für den Anschluss von externen Speichern (14, 20);
**dadurch gekennzeichnet, dass**
das Prozessorsystem (10) als «Field Programmable Gate Array» (10) - im folgenden FPGA genannt - ausgeführt ist und dass bei jeder Programmierung des FPGA (10) zwischen jedem Memory-Controller (11) oder zwischen jeder Schnittstelle (17) und dem Bussystem (18) ein Verschlüsselungsmodul (12, 12.1) eingefügt wird, um eine im Prozessorsystem (10) ablaufende Kommunikation mit externen Geräten (14, 20, 30) kryptographisch zu sichern.

**2.** Prozessorsystem (10) nach Anspruch 1,
**dadurch gekennzeichnet, dass**
nach der Programmierung des FPGA ein als Software-Modul ausgeführtes Verschlüsselungsmodul (12.1) zwischen einer Schnittstelle (17) und dem Bussystem (18) eingefügt ist und die Daten über ein Protokoll (SSL) gesichert sind.

**3.** Prozessorsystem (10) nach Anspruch 1 oder 2,
**dadurch gekennzeichnet, dass**
für das Verschlüsselungsmodul (12) die Schlüssel intern im Prozessorsystem (10) generiert werden.

**4.** Prozessorsystem (10) nach einem der Ansprüche 1 bis 3,
**dadurch gekennzeichnet, dass**
für eine erste Schlüsselgenerierung eine zufällige Sequenz von aussen über eine Schnittstelle (17) dem Prozessorsystem (10) zugeführt wird.

**5.** Prozessorsystem (10) nach einem der Ansprüche 1 bis 4,
**dadurch gekennzeichnet, dass**
das Verschlüsselungsmodul (12) nach einem Public/Private-Key-Verfahren arbeitet.
